(19) Europäisches Patentamt
European Patent Office
Office européen des brevets

(11) **EP 3 396 739 A1**

(12) **EUROPEAN PATENT APPLICATION**

(43) Date of publication:
**31.10.2018 Bulletin 2018/44**

(51) Int Cl.:
*H01M 2/34* (2006.01)  *H01M 10/44* (2006.01)

(21) Application number: **17168158.8**

(22) Date of filing: **26.04.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Robert Bosch GmbH**
 **70442 Stuttgart (DE)**

• **Lithium Energy and Power GmbH & Co. KG**
 **70469 Stuttgart (DE)**

(72) Inventors:
• **Deromelaere, Gaetan**
 **70806 Kornwestheim (DE)**
• **Wille, Christopher**
 **70563 Stuttgart (DE)**
• **Klinsmann, Markus**
 **70195 Stuttgart (DE)**

(54) **FAST DISCHARGE PROCESS AND UNIT, ARRANGEMENT OF A PLURALITY OF BATTERY CELLS, BATTERY AND APPARATUS**

(57)    The present invention concerns a fast discharge process for an arrangement of a plurality of battery cells (10) which are electrically connected in series with respect to each other, comprising (i) a common first fast discharge sub-process to controllably short-circuit said series of battery cells (10) or a sub-series thereof, and (ii) an individual second fast discharge sub-process assigned to at least one battery cell (10) of said series or said sub-series of battery cells (10) and to controllably short-circuit said assigned battery cell (10).

**Fig. 2**

## Description

State of the Art

The present invention concerns a fast discharge process and unit, in particular for an arrangement of a plurality of battery cells, an arrangement of a plurality of battery cells and in particular a cell module, a battery, and an apparatus, in particular a vehicle.

Recent growth of electronic industry has increased the demand for high performance, compact and portable electronic devices. Such electronic devices require batteries with high energy density and capacity. Particularly suitable for this purpose are nickel-rich and lithium-rich batteries. However, such batteries bear problems in case of battery cell failure or battery cell abuse. As a consequence, the battery may show undesired hazardous behavior, such as degassing, development of fire and explosion.

US 2010/0026242 A1 describes a method and an arrangement for discharging an energy storage system for electrical energy. US 2015/0051771 A1 concerns a battery safety system.

In order to avoid a hazardous behavior as described above, battery cells have been equipped with fast discharge units, for instance together with certain separator configurations within the electrochemical part. The fast discharge may be configured in order to discharge the electrochemical part via a resistor to be connected between the battery cell terminals in order to reduce the energy amount stored in the electrochemical part and in particular to simultaneously increase the temperature of the separator within the electrochemical part in order to cause an at least partial impermeability of the separator with respect to a certain kind of ions, thereby achieving an irreversible passivation of the underlying battery cell.

In view of the safety aspects, initiation of a fast discharge unit is majorly based on the process of short-circuiting battery cell terminals for starting the fast discharge process. Accordingly, different means for realizing the short-circuiting process of battery cell terminals have been developed.

In this regard, there exist subsidiary conditions on the fast discharge unit and its underlying processes, namely the short time behavior in order to achieve the discharge conditions and the accompanying low resistance of the fast discharge unit. Both aspects increase the costs in handling battery cell arrangements and cell modules with a plurality of battery cells.

Disclosure of the invention

The fast discharge process according to the present invention as defined in independent claim 1, however, has the advantage of enabling reduced costs in view of the equipment for fast discharge processes maintaining its reliability at the same time. This is achieved by defining a fast discharge process for an arrangement of a plurality of battery cells which are electrically connected in series with respect to each other according to independent claim 1, by comprising

(i) a common first fast discharge sub-process to controllably short-circuit said series of battery cells or a sub-series thereof, and

(ii) an individual second fast discharge sub-process assigned to at least one battery cell of said series or said sub-series of battery cells and to controllably short-circuit said assigned battery cell.

By using in the entire fast discharge process a common first fast discharge sub-process for a plurality of battery cells connected in series, the number of expensive fast operating components is reduced as pluralities of battery cells are operated with a single fast operating component thereby reducing costs. The cells' individual second and slow fast discharge processes can then be performed by means of simpler components which are also less expensive because of their enlarged operating time scale.

In the following, the fast fast discharge process is referred to as a common first fast discharge process in order to controllably short-circuit all connected battery cells and serious. This sub-process is effective until the first cell starts to go into a shut down mode. Thus, the terms common first fast discharge sub-process, first fast discharge sub-process, and fast fast discharge sub-process are used as synonyms in the following.

In addition, the slow fast discharge process is referred to as a second, individual or later fast discharge process assigned to each individual cell in order to ensure a shutdown mode of each individual cell after the first fast discharge process is not effective anymore. The second or later fast discharge process can be activated after the common first fast discharge process, but latest when the first cell of all cells in series starts to go into a shut down mode. Accordingly, the terms individual second fast discharge sub-process, second fast discharge sub-process, and slow fast discharge sub-process are used as synonyms in the following.

A similar reasoning applies to respective fast discharge units.

The dependent claims contain advantageous embodiments of the present invention.

In particular, in the fast discharge process according to the present invention said common first fast discharge sub-process may be carried out by controllably electrically connecting a first cell terminal of a first battery cell in said series or sub-series with a second cell terminal of a last battery cell in said series or sub-series.

Additionally or alternatively, a respective individual second fast discharge sub-process may be carried out by controllably electrically connecting the first cell terminal of said assigned battery cell with a second cell terminal thereof.

The processes may be activated only under certain circumstances. According to a preferred embodiment of the inventive process, said first and second discharge sub-processes may be performed upon detection of a discharge status of at least one of the battery cells.

It is of particular advantage, if said first fast discharge sub-process is initiated and/or carried out on a shorter timescale - in particular of about 10 ms or below - than said second or slow fast discharge sub-process which is initiated and/or carried out on a longer timescale, in particular of about 1 s or above.

In addition, the second fast discharge sub-process may be delayed to a certain amount of time from the beginning and/or termination of the first fast discharge sub-process.

In order to further the complexity and the costs for the equipment for carrying out the inventive process, it is of particular advantage if said first fast discharge sub-process is carried out based on a smaller short-circuiting Ohmic resistance - in particular in a range of about $10\,\Omega$ or below - than said second fast discharge sub-process which is carried out based on a larger short-circuiting Ohmic resistance in particular in a range of about $1\,k\Omega$ or above.

Preferably, said second fast discharge sub-process may be carried out by controllably connecting cell terminals of an assigned battery cell in parallel to the electrochemical part in order to discharge the battery cell under first predetermined conditions by connecting the battery cell terminals via a resistor of said larger short-circuiting Ohmic resistance.

A respective second fast discharge sub-process may preferably be carried out by discharging an assigned battery cell by means of a first current flowing through the battery cell and by connecting the first and second battery cell terminals via the resistor underlying the second or slow fast discharge sub-process.

Alternatively or in addition the resistor underlying the second fast discharge sub-process may be selected in order to cause the first current during a current flow through the battery cell heat the electrochemical part such that the separator reaches the predefined temperature.

Further additionally or alternatively, the resistance underlying the second fast discharge sub-process may be selected in order to avoid a thermal runaway of the battery cell during the heating of the electrochemical part by the first current flowing through the electrochemical part.

The present invention further concerns a fast discharge unit for an arrangement of a plurality of battery cells which are electrically connected in series with respect to each other.

The inventive fast discharge unit is in particular configured in order to perform a process for fast discharge according to the present invention.

The fast discharge unit preferably comprises at least one common first fast discharge unit configured in order to controllably short-circuit said series of battery cells or a sub-series thereof.

Additionally or alternatively, an individual second fast discharge unit may be assigned to one battery cell of said series or said sub-series of battery cells and may be configured in order to controllably short-circuit said assigned battery cell.

According to a preferred embodiment of the fast discharge unit according to the present invention, said common first fast discharge unit may be configured in order to controllably electrically connect a first cell terminal of a first battery cell in said series or sub-series with a second cell terminal of a last battery cell in said series or sub-series.

An individual second fast discharge unit may be configured in order to controllably electrically connect the first cell terminal of said assigned battery cell with a second cell terminal thereof.

Said first and second fast discharge units may be configured in order to be activated upon detection of a discharge status of at least one of the battery cells.

Additionally or alternatively, said first fast discharge unit may be configured in order to be activated on a shorter timescale - in particular of about 10 ms or below - than said second and slow fast discharge unit.

Said second fast discharge unit may preferably be configured in order to be activated on a longer timescale, in particular of about 1 s or above.

According to another preferred embodiment of the fast discharge unit according to the present invention, said first fast discharge unit may comprise a comparable smaller short-circuiting Ohmic resistance - in particular in a range of about $10\,\Omega$ or below - than said second fast discharge unit.

In particular, said second fast discharge unit may comprise a comparable larger short-circuiting Ohmic resistance and in particular in a range of about $1\,k\Omega$ or above.

Said individual second fast discharge unit may be configured in order to controllably connect cell terminals of an assigned battery cell in parallel to the electrochemical part and in order to discharge the battery cell under first predetermined conditions by connecting the battery cell terminals via a resistor of said larger short-circuiting Ohmic resistance.

A respective second fast discharge unit may be configured in order to discharge an assigned battery cell by means of a first current flowing through the battery cell and by connecting the first and second battery cell terminals via the resistor.

Said resistor may in particular be selected in order to cause the first current during a current flow through the battery cell and in order to heat the electrochemical part such that the separator reaches the predefined temperature.

Additionally or alternatively, the resistance may be selected in order to avoid a thermal runaway of the battery cell during the heating of the electrochemical part by the first current flowing through electrochemical part and the slow fast discharge unit.

According to another aspect of the present invention and arrangement of a plurality of battery cells and in particular a cell module are proposed.

In the cell arrangement of cell module according to the present invention said plurality of battery cells is electrically connected in series.

Each of the plurality of battery cells comprises first and second battery cell terminals for an external contact of the battery cell and an electrochemical part, preferably formed as or comprising a jelly roll or an electrode stack configuration, connected to the battery cell terminals.

Said series of battery cells or a sub-series thereof may advantageously be configured in order to be connected or connectable to a fast discharge unit according to the present invention.

At least one battery cell of said series or of said sub-series may be configured in order to be connected or connectable with its battery cell terminals to a second fast discharge unit of said underlying fast discharge unit, in parallel to the electrochemical part and in order to be discharged under first predetermined conditions by being connected with its battery cell terminals via a resistor of said larger short-circuit resistance.

The electrochemical part of a battery cell may comprise a positive electrode, a negative electrode, an electrolyte component having a conductive salt component and a solvent component, and a separator.

Said separator may be configured in order to become at least partially impermeable for ions generated inside of the electrochemical part upon reaching a predefined temperature.

In the arrangement according to the present invention at least one of the battery cells may be configured in order to be discharged or dischargeable by means of a respective second and slow fast discharge and/or by means of a first current flowing through the battery cell and the second fast discharge unit by being connected with its first and second battery cell terminals via the resistor of the second and slow fast discharge unit.

At least one of the battery cells may further be configured to heat the electrochemical part such that the separator reaches the predefined temperature when the resistor is accordingly selected in order to cause the first current during a current flow through the battery cell and the second and slow fast discharge unit.

In addition or alternatively, at least one of the battery cells may be configured in order to avoid a thermal runaway of the battery cell during the heating of the electrochemical part by the first current flowing through electrochemical part and the fast discharge unit when the resistance of the second fast discharge unit is accordingly selected.

The present invention suggests that in the arrangement or module of battery cells a battery cell comprises

(a) first and second battery cell terminals for an external contact of the battery cell,

(b) an electrochemical part, preferably formed as or comprising a jelly roll or an electrode stack configuration, connected to the battery cell terminals, and

(c) a fast discharge unit or a connection thereto connected to the battery cell terminals in parallel to the electrochemical part, having a discharge switch and configured to discharge the battery cell under first predetermined conditions by connecting the battery cell terminals by changing the state of the switch from an open state electrically insulating said battery cell terminals to a closed state electrically connecting said battery cell terminals, in particular via a resistor.

Preferably, a control and/or trigger unit or a connection to a control and/or trigger unit may be provided, too, wherein the control and/or trigger unit is formed according to the present invention and wherein the control and/or trigger unit is configured to controllably establish a contact between the first and second battery cell terminal by controllably triggering the trigger probe in electric contact with the discharge switch.

The electrochemical part of the inventive battery cell preferably comprises a positive electrode, a negative electrode, an electrolyte component having a conductive salt component and a solvent component, and a separator.

The degree of security of the inventive battery cell can be further increased if the separator is configured to become at least partially impermeable for ions generated inside of the electrochemical part upon reaching a predefined temperature.

The degree of reliability of the battery cell can be further increased

(A) if the fast discharge unit is configured to discharge the battery cell by means of a first current flowing through the battery cell and the fast discharge unit by connecting the first and second battery cell terminals via the resistor of the fast discharge unit and

(B) if the resistor is in particular selected to cause the first current during a current flow through the battery cell and the fast discharge unit to heat the electrochemical part such that the separator reaches the predefined temperature.

In order to even better avoid hazardous situations for the battery cell, the resistance of the fast discharge unit may be selected in order to avoid a thermal runaway of the battery cell during the heating of the electrochemical part by the first current flowing through the electrochemical part and the fast discharge unit.

The battery cell may comprise two battery cell terminals which are contactable from outside of the battery cell and an electrochemical part which is preferably constructed in the form of at least one jelly roll/electrode stack comprising a plurality of electrodes, an electrolyte comprising at least one conductive salt and at least one solvent, and at least one separator.

At least one separator may be constituted such that it becomes at least partially impermeable for ions which can be generated inside of the electrochemical part, when the at least one separator reaches a predefined temperature.

In order to increase the safety of the inventive battery cell, the battery cell includes a fast discharge unit having at least one resistor. The fast discharge unit is connectable between the two battery cell terminals and configured to discharge the battery by means of a first current flowing through the battery and the fast discharge unit.

More particularly, a first resistance value of the at least one resistor may be selected in such a way, that the first current causes during flowing through the battery and the fast discharge unit such a heating of the electrochemical part, that the at least one separator reaches the predefined temperature.

The present invention further concerns a battery comprising a plurality of battery cells and/or a plurality of cell modules, wherein one or a plurality of the battery cells and/or of the cell modules is or are formed according to the present invention.

According to a preferred embodiment of the inventive battery, the plurality of battery cells is configured as a plurality of pairs of battery cells, wherein at least one of the members of the pairs of battery cells is formed according to the present invention. It is of particular advantage that in the pairs it is sufficient that one of the members of the pairs is provided with the inventive concept of having a separation means. This reduces the burden of establishing the respective equipment.

However, a more preferred embodiment of the present invention provides for each battery cell of the plurality of battery cells a configuration according to the present invention, namely by establishing for each battery cell in the battery an individual fast discharge unit together with a respective control unit in particular with respective control parts and/or actuating and/or signaling parts.

Further on, the present invention also provides an apparatus and in particular a vehicle comprising an operation part and an energizing part for energizing the operation part for its operation. According to the present invention the energizing part is or comprises one or a plurality of battery cells, cell modules and/or batteries, each according to the present invention.

Brief description of the drawings

In the following section embodiments of the present invention are disclosed with reference to the enclosed figures.

Figure 1        is a schematic side view of an embodiment of an apparatus according to the present invention based on a battery cell and a second and slow fast discharge unit.

Figure 2        is a schematic presentation of another embodiment of an apparatus according to the present invention formed by a plurality of battery cells and having first and second fast discharge units.

Figures 3 to 6    schematically elucidate further aspects of the two-stage fast discharge concept.

Embodiments of the present invention

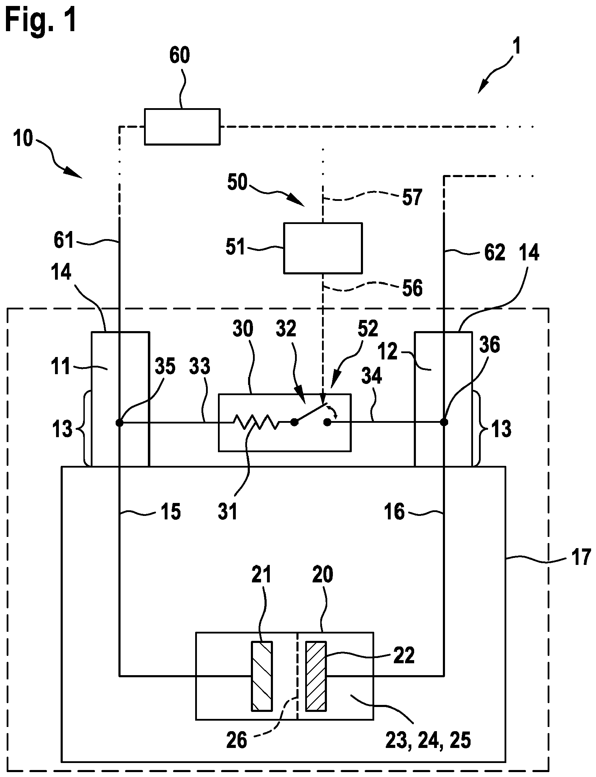

In the following, embodiments and the technical background of the present invention are described in detail by taking reference to accompanying figures 1 to 6. Identical or equivalent elements and elements which act identically or equivalently are denoted with the same reference signs. Not in each case of their occurrence a detailed description of the elements and components is repeated.

The depicted and described features and further properties of the invention's embodiments can arbitrarily be isolated and recombined without leaving the gist of the present invention.

Figure 1 is a schematic block diagram representing a side view of an apparatus 1 according to the present invention based on battery cells 10 and explicitly showing a second and slow fast discharge unit 30 connected to a battery cell 10.

The battery cell 10 shown in figure 1 comprises in a housing 17 an electrochemical part 20 which is formed by a first or positive electrode 21, a second or negative electrode 22 and an electrolyte component 23 having at least one salt component 24 and at least one solvent component 25.

The electrodes 21, 22 are immersed in the electrolyte 23 and they are separated by a separator 26 which has the property of becoming at least partially impermeable upon reaching from below a predetermined temperature threshold for one or several ion species generated in the battery cell 10.

The electrochemical part 20 is connected via terminal lines 15 and 16 to first and second battery cell terminals 11, 12 which are configured for establishing an external contact, e.g. for supplying electric power via supply lines 61, 62 to a load 60 in order to run a particular device providing the load 60.

Each of the first and second battery terminals 11, 12 comprises a connection side part 13 for establishing a connection to the battery cell 10 and its terminal lines 15, 16 on the one hand and an individual second and slow fast discharge unit 30 to be described below on the other hand.

In addition, the first and second battery terminals 11, 12 also comprise an external side part 14 for being contacted to respective supply lines 61, 62 connected to the load 60 representing a device to be energized by the battery cell 10.

In addition to the terminal lines 15, 16 for connecting the battery cell 10, at connection nodes 35, 36 discharge lines 33 and 34 are provided in the connection side part 13. For connecting the connection side parts 13 of the first and second battery cell terminals 11, 12, the individual second and slow fast discharge unit 30 which is configured in order to perform a fast discharge of the battery cell 10 under certain conditions and in order to thereby avoid hazardous situations.

As shown schematically in figure 1, this may be done by operating a discharge switch 32 or the like for closing the connection between the connection nodes 35 and 36 for discharging the battery cell 10 and its electrochemical part 20 via the serially enclosed resistor 31 having an appropriate resistance value.

On the one hand, the resistance value of the resistor 31 is chosen to achieve a discharge of the battery cell 20 in order to avoid a thermal run-away of the battery cell 10 and its electrochemical part 20.

In order to further support the safety aspects implemented by the fast discharge unit 30, a control and/or trigger unit 50 with a control part 51 is provided according to the present invention.

The control and/or trigger 50 is configured in order to conditionally initiate an electric conducting path between the respective battery cell terminal 11, 12, in the case of figure 1 of the first battery cell terminal 11.

The operations of the individual second and slow fast discharge unit 30 on the one hand and of the control and/or trigger unit 50 on the other hand may be initiated by first and second predetermined conditions which may also be equal and/or which may depend on each other.

In particular, the operation of the individual second and slow fast discharge unit 30 and of the control and/or trigger unit 50 may be designed such that the control and/or trigger unit 50 commences its operation not before the beginning of the operation of the individual second and slow fast discharge unit 30 and preferably with a particular delay after the fast discharge has started.

The control and/or trigger unit 50 as designed according to the present invention comprises a control part 51 and a trigger probe 52 which are connected to each other via a connecting line which is also called trigger line 56. The trigger line 56 may be referred to as an external connection.

Via the second trigger line 56, the control part 51 of the control and/or trigger unit 50 is capable of conditionally initiating operating the individual second and slow fast discharge unit 30, namely by conditionally operating the trigger probe 52.

Via connection with the second trigger line 56, the control part 51 and in particular the entire control and/or trigger unit 50 may be separated and externally be mounted with respect to the battery cell 10 and/or the fast discharge unit 30.

The conditions for operating the fast discharge unit 30 may be settled based on the conditions and the operation state of the electrochemical part 20 of the battery cell 10.

In addition to the second trigger line 56, the first trigger line 57 is used by the control part 51 of the controller and/or trigger unit 50 in order to conditionally activate or trigger one or plural common first and fast fast discharge units 70 to be described in the following.

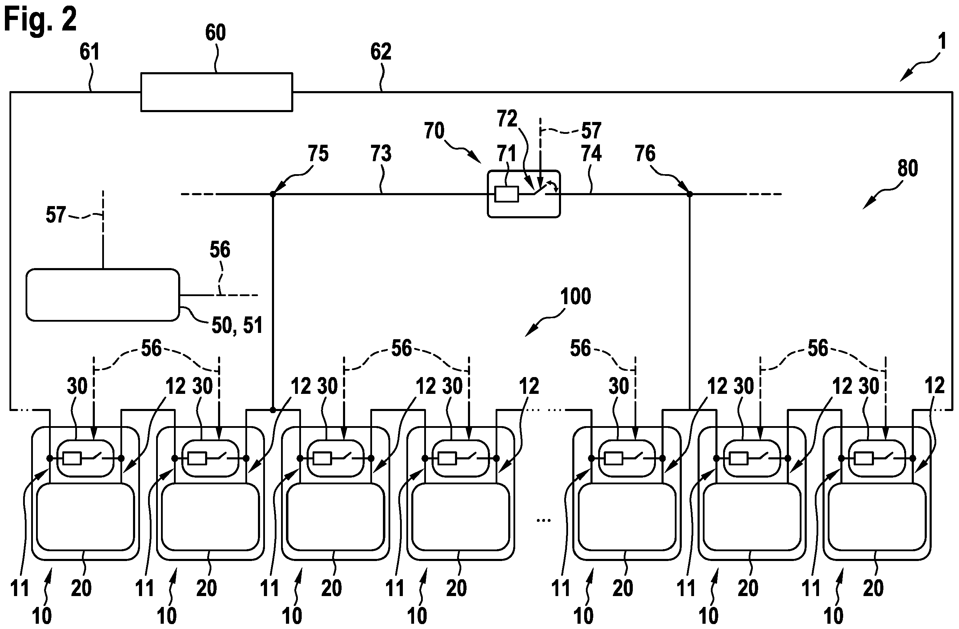

Figure 2 is a schematic presentation of another embodiment of an apparatus 1 according to the present invention formed by an arrangement 100 or module 100 comprising a plurality of battery cells 10 and having a fast discharge unit 80 comprising first and second fast discharge units 70 and 30, respectively.

Each of the battery cells 10 shown as components of the arrangement 100 or module 100 in figure 2 may be formed according to the embodiment shown in figure 1. However, this is not mandatory. Other configurations suitable for a particular application may be used, too.

In the arrangement 100 shown in figure 2, a plurality of battery cells 10 forms a series of battery cells 10; i.e. at least a part of the plurality of battery cells 10 is electrically connected in series with respect to each other. That means that the second cell terminal 12 of a preceding battery cell 10 is directly connected to a first cell terminal 11 of the directly following battery cell 10.

Either the complete series or a sub-series of the plurality of battery cells 10 is connected to the provided fast discharge unit 80 and in particular a common first and fast fast discharge unit 70 thereof. In other words,

(i) a first cell terminal 11 of a first 3 battery cell 10 of the series or sub-series of battery cells 10 is connected via the first connection node 75 to a first discharge line 73 of the common first and fast fast discharge unit 70 and

(ii) a second cell terminal 12 of a last battery cell 10 of the series or sub-series of battery cells 10 is connected via a second connection node 76 to a second discharge line 74 of the common first and fast fast discharge unit 70.

By means of a first trigger line 57 switching element 72 of the common first and fast fast discharge unit 70 can be controlled with respect to its separating and connecting states. In a trigger state a control and/or trigger unit 50 with its control part 51 - for instance in an emergency case where a battery cell 10 has to be discharged - operates a discharge switch 72 to connect with the discharge lines the first cell terminal 11 of the first battery cell 10 in the series or sub-series with the second cell terminal 12 of the last battery cell 10 in the series or sub-serious with interconnection of the first and comparably low discharge resistance or resistor 71, $R_{FDD,fast}$.

This is achieved - in case of a trigger state - in a short-term run, for instance within a few milliseconds.

In addition, the battery cells 10 are also discharged individually by the individual second and slow fast discharge units 30 conditionally triggered by the second trigger line 56 by the control and/or trigger units 50 with its control part 51.

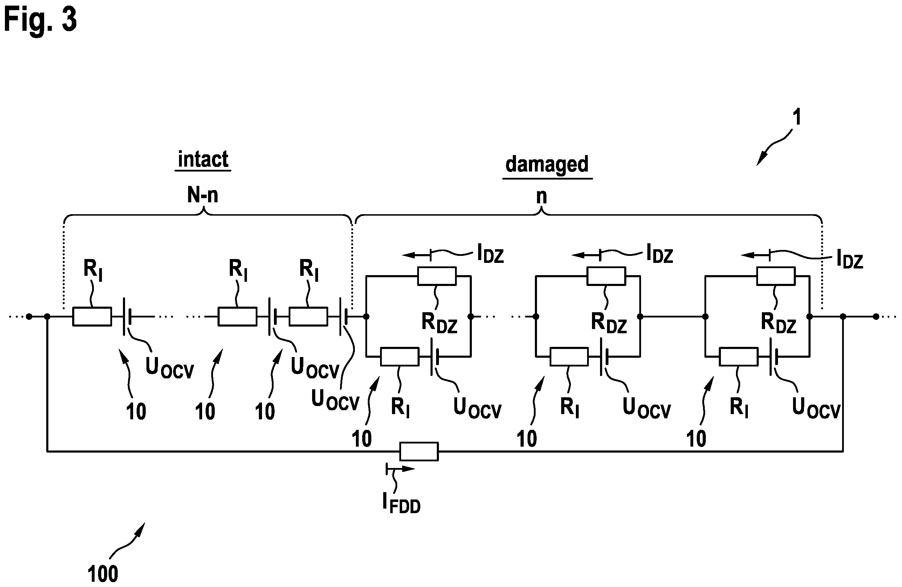

Figures 3 to 6 schematically elucidate further aspects of the two-stage fast discharge concept using in particular a fast discharge unit 80 comprising a common first and fast fast discharge unit 70 and individual second and slow fast discharge units 30 both conditionally controlled and triggered by a control and/or trigger unit 50 and its control part 51 via first and second trigger lines 57 and 56, respectively.

Figures 3, 5, and 6 by means of equivalent circuits represent the electrodynamic situation of embodiments of the present invention.

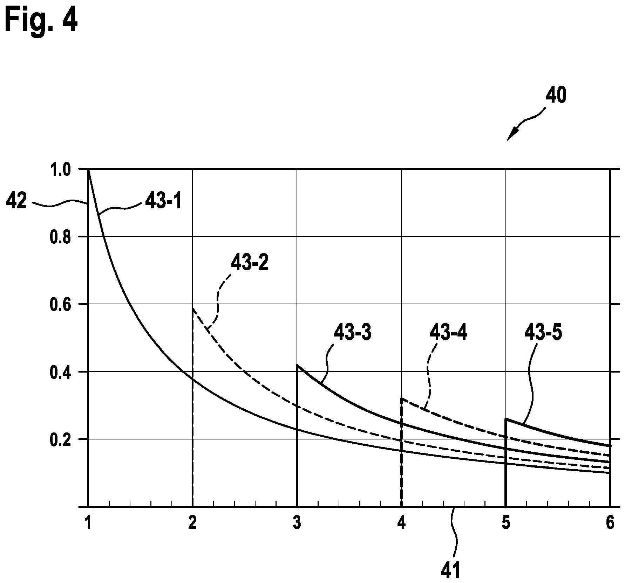

Figure 4 demonstrates by means of a graph 40 with abscissa 41 and ordinate 42 and traces 43-1 to 43-5 the electrodynamic effect of the present invention.

These and further features, properties and advantages of the present invention will be further discussed in the following:

Lithium ion or Li-ion batteries are vital energy storage devices due to their high specific energy density. They are predominantly used in consumer electronics; however, improvements in safety are required for full acceptance of lithium ion cells in transportation applications, such as electric vehicles. The presence of a volatile, combustible electrolyte and an oxidizing agent (lithium oxide cathodes) makes the lithium ion cell susceptible to fires and explosions. Internal shorts or mechanical damage, e.g. caused within certain abuse tests such as the nail penetration test, can trigger thermal runaway and when left unchecked, combustion of battery materials.

When a lithium ion battery cell exceeds a critical temperature, e.g. due to Joule heating at an internal short or nail penetration location, exothermic chemical reactions are initiated between the electrodes and the electrolyte, raising the cell's internal pressure and temperature. The increased temperature accelerates these chemical reactions, producing more heat. Further, the onset temperature of thermal runaway in lithium ion batteries decreases with increasing state of charge, making lithium ion cells even more susceptible to explosive failure.

A possible measure to prevent catastrophic thermal failure in commercial lithium ion batteries is the so called fast discharge device. The principle of this device is to externally shorten the cell 10. This way, the current flowing around the nail penetration location or internal short is reduced due to an external low-resistive current path.

The original idea of the fast discharge device is an application on cell level, i.e. by equipping each cell with a fast discharge device, the cell shall become safe in the sense that it passes the required safety tests and does not reach a hazardous state if an internal short occurs during operation in the field. However, the combination of one fast discharge device per cell may not be the optimal solution from a cost perspective. Hence, it is desirable to use one fast discharge device on multiple cells. Possibilities would be to either connect the fast discharge device to a string of cells in series or parallel connection. As is explained below, both possibilities come with strong disadvantages. For this reason, an alternative concept is suggested that uses a two-stage activation of two or many fast discharge devices.

The concept suggested avoids issues that render the fast discharge principle ineffective, for example, by undesired interruption of the fast discharge current path, or that provoke hazardous behavior of the lithium ion cells due to other mechanisms, such as, for example, reverse polarity. At the same time, it exploits benefits with respect to the safety behavior resulting from the connection in series and requires only one single fast discharge device (for many cells) that fulfills the demanding requirements (fast activation, low resistance). All other fast discharge devices necessary in the suggested arrangement are allowed to be slower and of higher resistance, possibly resulting in lower costs.

Using one fast discharge device for multiple cells in a parallel connection is expected to be less effective since in this scenario, the resistance of the fast discharge device needs to be significantly lower. The reason for this is that the current of each cell is running either through its damage zone - the damaged area around the nail is depicted by the resistances $R_{DZ}$ in figure 3 - or through the fast discharge device; $R_{FDD}$ in figure 3. From the perspective of one cell 10, this means that the effective resistance of the fast discharge current path is higher. Hence, more current flows through the damage zone, generating more heat and thus more likely leading to a hazardous event. This was confirmed by analytic solutions to appropriate equivalent circuit diagrams and simulations.

Fast discharge of multiple cells in series results in a lower current running through the damage zones of the nailed cells if the fast discharge resistance is the same as in a 1-cell-1-fast discharge-arrangement. This was shown by analytic solution, as given in formulas (1) and (2), and confirmed by simulations. The effect of the series connection on the damage zone current is also shown in figure 3. As can be seen from the diagram, with, for example, only three cells in a series connection and one being nailed, the peak damage zone current is already reduced to 24% of that in a 1-cell-1-fast discharge-arrangement. This leads to less local heating and thus more likely to a non-hazardous behavior of the cell in a safety test.

Figure 3 elucidates fast discharge of N battery cells 10 in series of which n are damaged for instance by being penetrated by a nail and all others (N-n) are intact.

The resistance $R_{DZ}$ denotes the resistance of the damaged zone around the nail, $R_I$ is the internal resistance of the cell, Uocv the open-circuit-voltage, $R_{FDD}$ the resistance of the fast discharge device, $I_{DZ}$ the current through the damage zone and $I_{FDD}$ the current through the fast discharge device.

The following formulas (1) and (2) describe the absolute values of the peak currents through the fast discharge device and one damage zone in dependence from the internal resistance $R_I$ of one cell 10, the fast discharge resistance 71 which is denoted by $R_{FDD}$, the damage zone resistance $R_{DZ}$ and the open-circuit-voltage Uocv of the respective battery cell 10:

$$\left|I_{FDD}\right| = U_{OCV} \cdot \frac{(N-n)\cdot(R_I + R_{DZ}) + n \cdot R_{DZ}}{((N-n)\cdot R_I + R_{FDD})\cdot(R_I + R_{DZ}) + n \cdot R_{DZ} \cdot R_I} \qquad (1)$$

$$\left|I_{DZ}\right| = U_{OCV} \cdot \frac{R_{FDD}}{R_{DZ} \cdot (R_{FDD} + N \cdot R_I)\cdot R_I \cdot (R_{FDD} + (N-n)\cdot R_I)} \cdot \qquad (2)$$

The expressions (1) and (2) are derived analytically from the equivalent circuit model shown in figure 3.

Figure 4 elucidates the peak currents flowing through the damaged zone around the nail for different numbers of overall cells (abscissa) in the series connection, plotted for different numbers of nailed cells shown in different traces 43-1 to 43-5. The current is normalized with respect to the peak current of a single cell with a single fast discharge device 80, 30.

However, fast discharge of cells in a series connection nevertheless can lead to circumstances that result in a hazardous behavior of the cell. The reason for this is the following.

The fast discharge concept relies on the presence of a shutdown separator or a material with a similar function that deactivates the cell by hindering lithium ion motion from the anode to the cathode. The shutdown is activated if the inner temperature of the cell reaches a specific threshold. The temperature increase hereby results from the electrochemical work done in the cell when it is discharged rapidly. If multiple cells are discharged at the same time, it is very unlikely that the cells go into shutdown simultaneously due to differences in the thermal boundary conditions, the electrical load, manufacturing variances, etc. Non-simultaneous shutdown of the cells is a severe issue for bringing the cells into a safe state due to the following reasons:

- Reverse polarity: If a number cells are shorted externally, as done by the fast discharge device, and an interruption of the current path occurs within the cells (separator shutdown, current collector melting, etc.) the potential of the electrodes can be shifted such that at some of the cells a reversed voltage is obtained. This can lead to a hazardous behavior of the cells due to different effects. For example, if the potential of Cu is shifted above that of Al, $Cu^{2+}$-dis-

solution can take place, leading to growth of Cu dendrites. If the dendrites then shorten the cells, e.g. by growth through the separator or at the cell terminals, large local currents can flow which result in local temperature hot spots that might lead to thermal runaway.

- Discharge of intact cells 10 over the damage zones of nailed cells: If the nailed cells 10 go into shutdown, their electrochemical functionality is deactivated. However, the current path over the damaged material around the nail is still present. Hence, intact cells in the series connection can discharge over this current path, resulting again in a strong local temperature increase which may result in a thermal runaway of the cell.

- Interruption of the fast discharge current path by shutdown of intact cells 10: If one of the intact cells goes into shutdown first, the current path over the fast discharge path is interrupted. In this case, the condition for the nailed cell 10 is similar to one without any fast discharge.

The principle of our idea relies on a two-stage activation of two or more fast discharge units or devices 80:

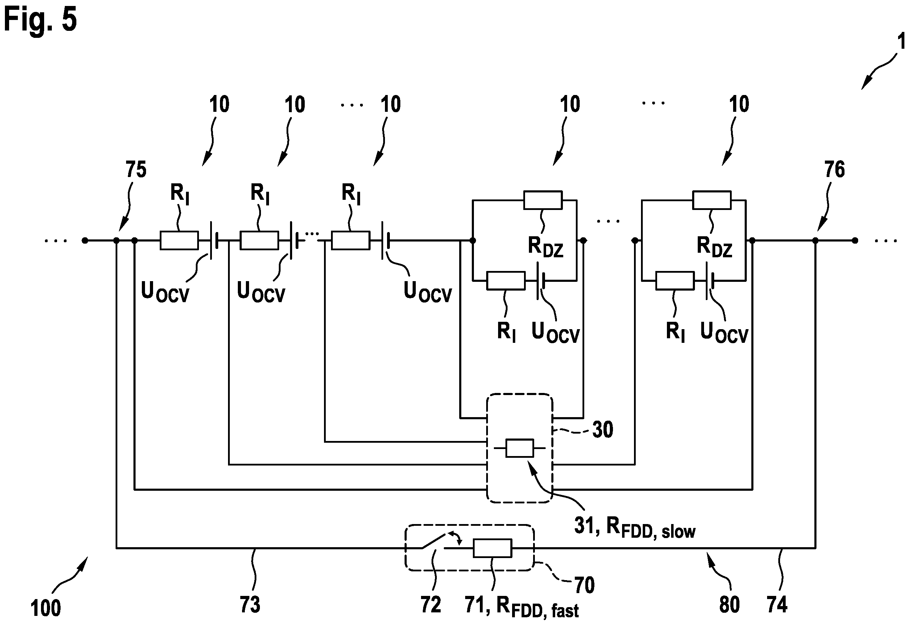

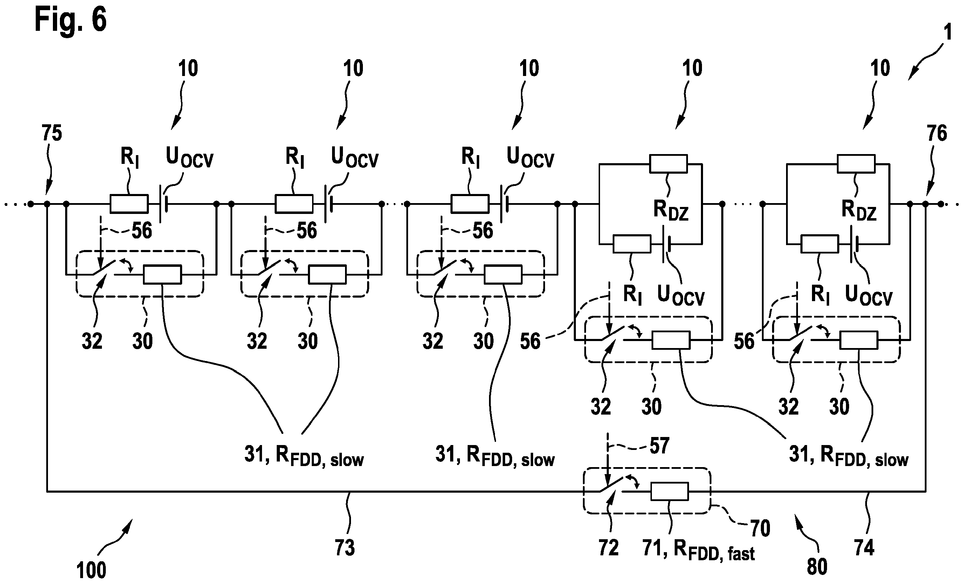

(1) The fast discharge device that needs to be activated first shortens the entire series string of cells or a sub-series thereof. This is depicted by the external, current path in the diagrams of Figure 5 and 6. It is referred to as a first and "fast" fast discharge unit 70. The application of this fast discharge device 70 exploits the benefits on the current flowing at the damaged zone around the nail within battery cells 10 in a series connection, as described above.

(2) Shutdown of the separator 26 in one or many of the cells should start at approximately 10 to 15 s after activation of the first or fast fast discharge unit or device 70. In order to avoid the mentioned critical mechanisms, such as, for example, reverse polarity, the second or slow fast discharge device(s) or units 30 need to be activated before shutdown occurs. This can be done either with one device 30 shortening all the cells 10 individually, as depicted in figure 5 or by many devices 30 as depicted in figure 6.

In figures 5 and 6 equivalent circuit diagrams for the two-stage activation of the fast discharge devices are shown.
$R_{DZ}$ denotes the resistance of the damaged zone around the nail, $R_I$ is the internal resistance of the cell, Uocv the open-circuit-voltage, $R_{FDD,fast}$ the resistance of the first or fast fast discharge device and $R_{FDD,slow}$ the resistance of the second or slow fast discharge device 30.
Figure 5 shows realization with a single slow fast discharge unit 30 or device that shortens all battery cells 10 individually by one device 30.
Figures 6 elucidates an embodiment with plural individual and separate second or slow fast discharge devices 30.
The benefits of the proposed two-stage activation according to the present invention are inter alia the following:

- Full exploitation of the "series connection effect" lowering the current through the damaged zone around the nail as long as only the fast fast discharge device 70 is activated.

- Only the fast fast discharge device 70 needs to be activated within a very short time scale. The "slow" fast discharge device can be activated later (before shutdown of cells).

- This allows using alternative mechanisms for the device, which may be cheaper to achieve.

- The highest current running through the damaged zone around the nail occurs directly after penetration of the nail. To lower this current, the resistance 71, $R_{FDD,fast}$ of the "fast" fast discharge device 70 needs to be very low.

- At later stages, e.g. after approximately 1 s, the current provided by the cells 10 decreases significantly due to limitations in the underlying electrochemical processes. Since less current needs to be bypassed through the second and slow fast discharge devices 30, their resistance 31, $R_{FDD,slow}$ might allow for higher values. Hence, the slow fast discharge devices 30 may not have the same demanding requirements in terms of the resistance as the fast fast discharge device 70.

- This allows using alternative mechanisms for the individual second and slow fast discharge unit or device 30 or smaller dimensioning, resulting in lower costs.

- Due to the slow fast discharge device(s) or units 30, detrimental mechanisms, such as, for example, reverse polarity or interruption of the fast discharge current path, are avoided.

The above mentioned concept can be used in the lithium ion battery technology but is not limited to this field.

**Claims**

1. Fast discharge process for an arrangement of a plurality of battery cells (10) which are electrically connected in series with respect to each other, comprising:

   - a common first fast discharge sub-process to controllably short-circuit said series of battery cells (10) or a sub-series thereof, and
   - an individual second fast discharge sub-process assigned to at least one battery cell (10) of said series or said sub-series of battery cells (10) and to controllably short-circuit said assigned battery cell (10).

2. Fast discharge process according to claim 1, wherein

   - said common first fast discharge sub-process is carried out by controllably electrically connecting a first cell terminal (11) of a first battery cell (10) in said series or sub-series with a second cell terminal (11) of a last battery cell (10) in said series or sub-series and/or
   - an individual second fast discharge sub-process is carried out by controllably electrically connecting the first cell terminal (11) of said assigned battery cell (10) with a second cell terminal (12) thereof.

3. Fast discharge process according to any one of the preceding claims, wherein

   - said first and second fast discharge sub-processes are performed upon detection of a discharge status of at least one of the battery cells (10) and/or
   - said first fast discharge sub-process is initiated and/or carried out on a shorter timescale - in particular of about 10 ms or below - than said second fast discharge sub-process which is initiated and/or carried out on a longer timescale, in particular of about 1 s or above.

4. Fast discharge process according to any one of the preceding claims, wherein said first fast discharge sub-process is carried out based on a smaller short-circuiting Ohmic resistance (71, $R_{FDD,fast}$) - in particular in a range of about 10 $\Omega$ or below - than said second fast discharge sub-process which is carried out based on a larger short-circuiting Ohmic resistance (31, $R_{FDD,slow}$) in particular in a range of about 1 k$\Omega$ or above.

5. Fast discharge process according to any one of the preceding claims, wherein said second fast discharge sub-process is carried out by controllably connecting cell terminals (11, 12) of an assigned battery cell (10) in parallel to the electrochemical part (20) in order to discharge the battery cell (10) under first predetermined conditions by connecting the battery cell terminals (11, 12) via a resistor (31) as said larger short-circuiting Ohmic resistance (31, $R_{FDD,slow}$).

6. Fast discharge process according to claim 5, wherein

   - a respective second fast discharge sub-process is carried out by discharging an assigned battery cell (10) by means of a first current flowing through the battery cell (10) and by connecting the first and second battery cell terminals (11, 12) via the resistor (31, $R_{FDD,slow}$) underlying the second fast discharge sub-process,
   - the resistor (31, $R_{FDD,slow}$) underlying the second fast discharge sub-process is in particular selected in order to cause the first current during a current flow through the battery cell (10) heat the electrochemical part (20) such that the separator (26) reaches a predefined temperature at which the separator (26) is configured to become at least partially impermeable for ions generated inside of the electrochemical part (20) and/or
   - wherein the resistance (31, $R_{FDD,slow}$) underlying the second fast discharge sub-process is selected in order to avoid a thermal runaway of the battery cell (10) during the heating of the electrochemical part (20) by the first current flowing through electrochemical part (20).

7. Fast discharge unit (80) for an arrangement of a plurality of battery cells (10) which are electrically connected in series with respect to each other, in particular configured to perform a process according to any one of claims 1 to 6, comprising:

   - at least one common first fast discharge unit (70) configured in order to controllably short-circuit said series of battery cells (10) or a sub-series thereof and/or
- an individual second fast discharge unit (30) assigned to one battery cell (10) of said series or said sub-series of battery cells (10) and configured in order to controllably short-circuit said assigned battery cell (10).

8. Fast discharge unit (80) according to claim 7, wherein

- said first fast discharge unit (70) is configured in order to controllably electrically connect a first cell terminal (11) of a first battery cell (10) in said series or sub-series with a second cell terminal (11) of a last battery cell (10) in said series or sub-series and/or
- an individual second fast discharge unit (30) is configured in order to controllably electrically connect the first cell terminal (11) of said assigned battery cell (10) with a second cell terminal (12) thereof.

9. Fast discharge unit (80) according to any one of claims 7 and 8, wherein

- said first and second fast discharge units (70, 30) are configured in order to be activated upon detection of a discharge status of at least one of the battery cells (10) and/or
- said first fast discharge unit (70) is configured in order to be activated on a shorter timescale - in particular of about 10 ms or below - than said second fast discharge unit (30) which is configured in order to be activated on a longer timescale, in particular of about 1 s or above.

10. Fast discharge unit (80) according to any one of claims 7 to 9, wherein said first fast discharge unit (70) comprises a smaller short-circuiting Ohmic resistance (71, $R_{FDD,fast}$) - in particular in a range of about 10 $\Omega$ or below - than said second fast discharge unit (30) which in particular comprises a larger short-circuiting Ohmic resistance (31, $R_{FDD,slow}$) and in particular in a range of about 1 k$\Omega$ or above.

11. Fast discharge unit (80) according to any one of claims 7 to 10, wherein said second fast discharge unit (30) is configured in order to controllably connect cell terminals (11, 12) of an assigned battery cell (10) in parallel to the electrochemical part (20) and in order to discharge the battery cell (10) under first predetermined conditions by connecting the battery cell terminals (11, 12) via a resistor (31) as said larger short-circuiting Ohmic resistance (31, $R_{FDD,slow}$).

12. Fast discharge unit (80) according to any one of claims 7 to 11, wherein

- a respective second fast discharge unit (30) is configured in order to discharge an assigned battery cell (10) by means of a first current flowing through the battery cell (10) and by connecting the first and second battery cell terminals (11, 12) via the resistor (31),
- the resistor (31) is in particular selected in order to cause the first current during a current flow through the battery cell (10) and in order to heat the electrochemical part (20) such that the separator (26) reaches a predefined temperature at which the separator (26) is configured to become at least partially impermeable for ions generated inside of the electrochemical part (20), and/or
- the resistance (31) is selected in order to avoid a thermal runaway of the battery cell (10) during the heating of the electrochemical part (20) by the first current flowing through electrochemical part (20) and the fast discharge unit (30).

13. Arrangement (100) of a plurality of battery cells (10) and in particular cell module (100), wherein

- said plurality of battery cells (10) is electrically connected in series and each of the plurality of battery cells (10) comprises:

   - first and second battery cell terminals (11, 12) for an external contact of the battery cell (10) and
   - an electrochemical part (20), preferably formed as or comprising a jelly roll or an electrode stack configuration, connected to the battery cell terminals (11, 12),

- said series of battery cells (10) or a sub-series thereof is configured in order to be connected or connectable to a fast discharge unit (80) according to any one of claims 7 to 12, and
- at least one battery cell (10) of said series or of said sub-series is configured in order to be connected or connectable with its battery cell terminals (11, 12) to a second fast discharge unit (30) of said underlying fast discharge unit (80) in parallel to the electrochemical part (20) and in order to be discharged under first predetermined conditions by being connected with its battery cell terminals (11, 12) via a resistor (31).

14. Arrangement (100) of battery cells (10) according to claim 13, wherein in each battery cell (10)

- the electrochemical part (20) comprises a positive electrode (21), a negative electrode (22), an electrolyte component (23) having a conductive salt component (24) and a solvent component (25), and a separator (26), and
- the separator (26) is configured in order to become at least partially impermeable for ions generated inside of the electrochemical part (20) upon reaching a predefined temperature.

15. Arrangement (100) of battery cells (10) according to claim 13 or 14, wherein at least one of the battery cells (10) is configured

- in order to be discharged or dischargeable by means of a respective second fast discharge (30) and/or by means of a first current flowing through the battery cell (10) and the second fast discharge unit (30) by being connected with its first and second battery cell terminals (11, 12) via the resistor (31) of the second fast discharge unit (30),
- in order to heat the electrochemical part (20) such that the separator (26) reaches the predefined temperature when the resistor (31) is accordingly selected to cause the first current during a current flow through the battery cell (10) and the second and slow fast discharge unit (30), and/or
- in order to avoid a thermal runaway of the battery cell (10) during the heating of the electrochemical part by the first current flowing through electrochemical part (20) and the second fast discharge unit (30) when the resistance (31) of the second fast discharge unit (30) is accordingly selected.

16. Battery (100), comprising a plurality of cell arrangements (100) or cell modules (100) according to any one of claims 13 to 15.

17. Apparatus (1) and in particular vehicle, comprising:

- an operation part (60) and
- an energizing part for energizing the operation part,

wherein the energizing part is or comprises one or a plurality of cell arrangements (100) or cell modules (100) according to any one of claims 13 to 15 and/or batteries (100) according to claim 16.

**Fig. 1**

# Fig. 2

EP 3 396 739 A1

Fig. 3

# Fig. 4

**Fig. 5**

EP 3 396 739 A1

Fig. 6

Europäisches
Patentamt

European
Patent Office

Office européen
des brevets

## EUROPEAN SEARCH REPORT

Application Number

EP 17 16 8158

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2015 002077 B3 (AUDI AG [DE]) 9 June 2016 (2016-06-09) * paragraphs [00070008], [0052], [0070]; figure 1 * | 1-17 | INV. H01M2/34 H01M10/44 |
| A | DE 10 2012 017190 A1 (DAIMLER AG [DE]; LI TEC BATTERY GMBH [DE]) 6 March 2014 (2014-03-06) * the whole document * | 1-17 | |
| A | EP 2 849 309 A1 (LG CHEMICAL LTD [KR]) 18 March 2015 (2015-03-18) * the whole document * | 1-17 | |

TECHNICAL FIELDS
SEARCHED (IPC)

H01M
G01R
H02J

The present search report has been drawn up for all claims

| Place of search | Date of completion of the search | Examiner |
|---|---|---|
| Munich | 21 June 2017 | Topalov, Angel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 16 8158

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2017

| Patent document cited in search report | Publication date | Patent family member(s) | Publication date |
|---|---|---|---|
| DE 102015002077 B3 | 09-06-2016 | DE 102015002077 B3<br>WO 2016131792 A1 | 09-06-2016<br>25-08-2016 |
| DE 102012017190 A1 | 06-03-2014 | NONE | |
| EP 2849309 A1 | 18-03-2015 | CN 104396115 A<br>EP 2849309 A1<br>JP 5960361 B2<br>JP 2015524651 A<br>KR 20140060169 A<br>US 2014266062 A1<br>WO 2014073910 A1 | 04-03-2015<br>18-03-2015<br>02-08-2016<br>24-08-2015<br>19-05-2014<br>18-09-2014<br>15-05-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100026242 A1
- US 20150051771 A1